# EUROPEAN PATENT SPECIFICATION

(11) **EP 2 813 393 B1**
(45) Date of publication and mention of the grant of the patent: **30.10.2019**
(21) Application number: 14172155.5
(22) Date of filing: 12.06.2014
(51) Int. Cl.: B60P 3/04

(54) **Horsebox partition**
Pferdetransportwagentrennwand
Séparation pour véhicules de transport de chevaux

(30) Priority: 13.06.2013 GB 201310519; 28.05.2014 GB 201409414
(43) Date of publication of application: 17.12.2014
(73) Proprietor: Ifor Williams Trailers Limited, Cynwyd Corwen LL21 0LB (GB)
(72) Inventor: Davies, Bryn, WREXHAM, LL14 2DH (GB)
(74) Representative: HGF Limited

(56) References cited:
- AU-A1- 2005 202 792
- US-A- 340 946
- US-A- 382 934

## Description

### TECHNICAL FIELD

This invention relates to a horsebox and a partition used inside a horsebox for dividing the interior space into a number of compartments in which different horses, ponies or other animals may travel, such as disclosed in US 340946 A.

The term "horsebox" as used herein means any trailer having an integral enclosure or any container designed for mounting directly onto a chassis cab vehicle in which horses and/or ponies may be transported. Although less common, other animals may also be transported in this type of vehicle or trailer. Accordingly, the term "horsebox" should be understood in the wider sense to include any such vehicles or trailers in which any type of animals may be transported, and is not limited only to suitability for or use for horses, ponies and other equines.

### BACKGROUND

Horseboxes are known, for example as disclosed in GB1128969 and FR2598984 in which compartments or stalls for respective animals are arranged transversely to, in fact substantially perpendicular to, the longitudinal axis and direction of travel of the trailer or container by means of respective partitions being provided which likewise extend substantially perpendicular to the longitudinal axis and direction of travel to define these compartments. As the width of the vehicle or trailer is typically limited to 2.3 m or less to meet legal and practical requirements for road transport only ponies can be practically transported in compartments which extend perpendicular to the longitudinal axis of the vehicle or trailer. For ponies the current legal minimum stall length is 1.8 m, whereas for adult horses the current legal requirement is for a minimum 2.5 m stall length.

FR2940938 discloses a horsebox having an optional camping space in which the compartments or stalls for respective animals are also arranged transversely, this time somewhat obliquely relative to the longitudinal axis of the van or trailer, and the partition walls are movable to allow for this arrangement.

A horsebox trailer of 2.5 m width is deemed too wide to be of practical use. Horsebox trailers frequently need to be taken down restricted routes, narrow lanes, driveways and narrow gate openings that are difficult to navigate with a 2.3 m wide trailer, let alone try with a 2.5 m wide trailer. Therefore, it is generally desirable, in respect of horseboxes, to provide a partition system that works at a trailer maximum width of 2.3 m but with minimum floor area to keep the trailer weight and size to an absolute minimum. It is also desirable to provide for adjustment of the number, position and spacing of partitions within the horsebox to accommodate different numbers of horses or ponies, from one or two adult horses up to three or four ponies. With a minimum stall length of 2.5 m for adult horses and a trailer width of only 2.3 m stalls for horses need to be positioned diagonally (obliquely) across the trailer to make best use of floor space. As ponies only require a stall length of 1.8 m they can be positioned transversely (perpendicularly) across the trailer. This uses less space and allows carriage of additional ponies in the space required for adult horses.

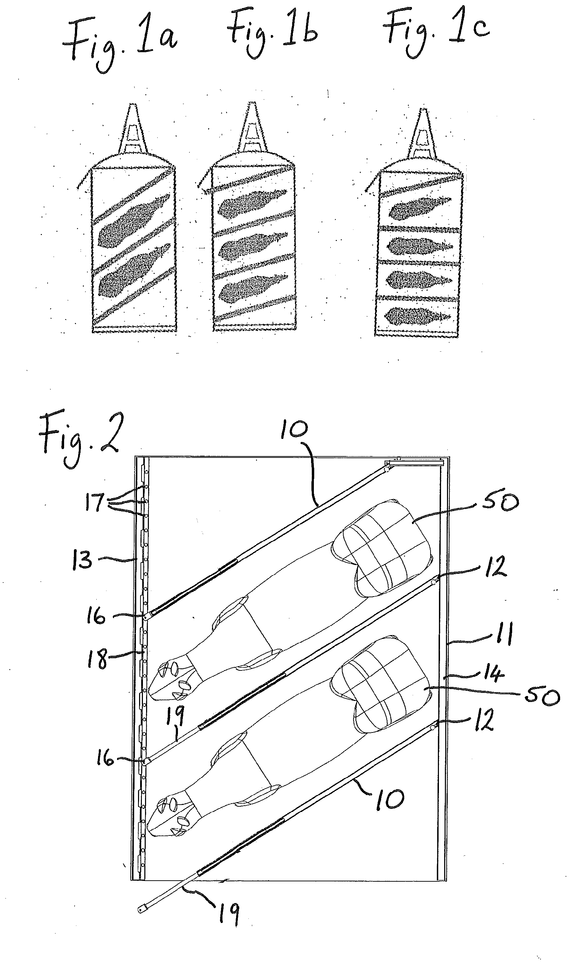

To meet these requirements it is already known to provide stall partitions for horseboxes which can be mounted in either the transverse (i.e. perpendicular) or diagonal (i.e. oblique) positions. By way of example, three known arrangements which may be used for two adult horses, three juvenile horses (or three large ponies) or four small ponies, respectively, are shown in schematic plan view in accompanying figures 1a, 1b and 1c.

As illustrated in accompanying figure 2 which is a schematic plan view of a known horsebox partitioning system, in existing horseboxes manufactured by the applicant and by others, the partitions 10 defining the stalls for accommodating animals 50 are each pivotably connected at spaced locations 12 along the interior of one side wall 11 of the box. These pivotal connection locations 12 (other than the first one at the front) are appropriately selected by the user from any one of a series of connection points arranged, for example, about 10 cm apart along a rail 14 mounted along the said side wall. The partitions 10 may then be arranged by being swung to take up appropriate positions either at an oblique angle or substantially perpendicular to the longitudinal axis of the box, whatever the user selects as being the most suitable orientation of partitions for the animals which are being transported. The free ends of these partitions 10 are attachable at suitable locations 16 along the interior of the opposing side wall 13 of the box. Again, the attachment locations 16 are selected by the user from a series of attachment points provided by holes 17 arranged along a similar rail 18 mounted along the opposing side wall 13 of the box.

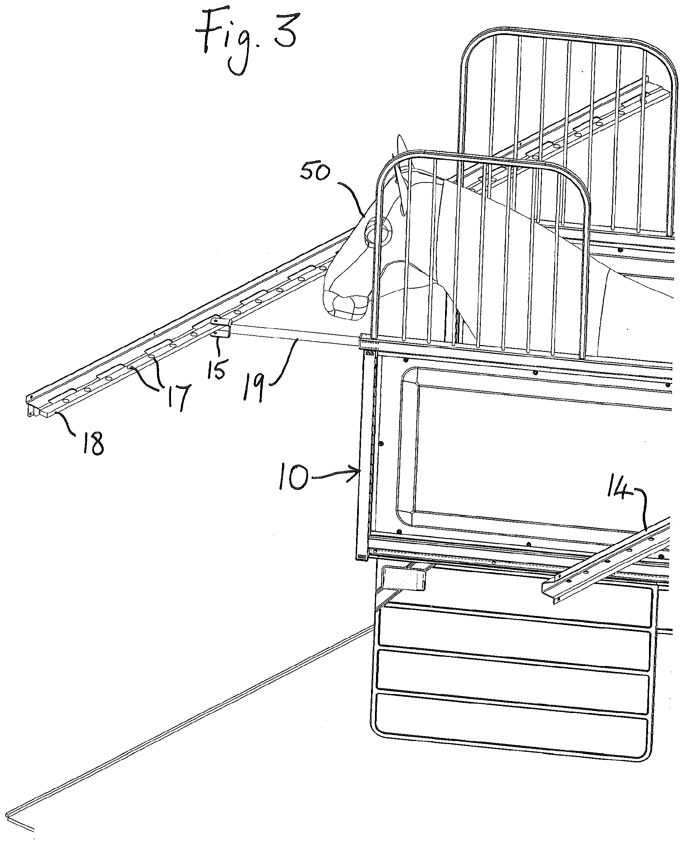

As any particular partition 10 is switched from the substantially perpendicular position to the oblique position it needs to increase in length. In the known arrangement this has been achieved by providing, on each partition 10, a connection arm 19 in the form of a sliding telescopic tube that extends axially and substantially horizontally out of the free end of the partition to reach and be connected to the other side 13 of the box. This known telescopic attachment arm 19 is shown more clearly in figure 3 which is an enlarged perspective view showing how one partition 10 is attached in an oblique disposition. The problem with such a telescopic tube 19 is that it becomes inherently weaker to bending as it is extended. To cope with the load of an adult horse standing in an obliquely oriented stall and leaning against the partition it becomes increasingly difficult to make the connection arm 19 strong enough without making the partition as a whole too heavy. Also, as the length of the partition is increased only by the projection of the tubular arm a gap is created in the sides of the stalls (the space below the or each extended connection arm 19) which the horse may attempt to get through either to disturb the neighbouring horse, or to try and escape, or it may get trapped or injured in this way.

Additionally, as is apparent in figure 2, with the extended connection arm 19 in line with the partition leaf 10, additional trailer length is required to make the connection when the partitions are arranged obliquely for adult horses, which results in a greater amount of wasted space at the opposing corners at each end of the box.

AU 2005202792 A1 discloses a partition for a horsebox comprising a main leaf having a first end adapted for pivotable attachment to a side wall of the box enclosure and having a second end, an auxiliary leaf hingedly connected to the second end of the main leaf, a fixed length connection arm which is hingedly connected to the outer end of the auxiliary leaf so as to be swingable in a substantially horizontal plane, and a fastening device carried at the free end of the connection arm. The previously known telescopic tube is here replaced with a fixed length horizontally pivotable connection arm. The length of the partition is then changed by folding at the hinge between auxiliary leaf and the connection arm. An additional horizontally pivotable chest bar is also provided for attachment between the main leaf of such a partition and the auxiliary leaf of an adjacent partition.

An object of the invention is to provide an improved partitioning system which also obviates the above-discussed problems relating to changing partition arrangement while minimising the size of horsebox, specifically the length of the horsebox, required to accommodate the same number of animals as hitherto.

A further object is to improve the fastening arrangement and provide other safety features.

### BRIEF SUMMARY OF DISCLOSURE

The present invention provides a partition for a horsebox as specified in claim 1.

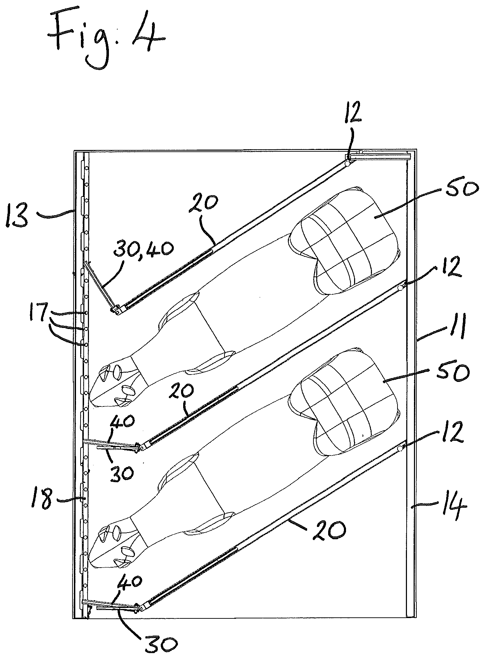

The vertical pivoting capability of the connector arm makes for a better connection with great ease of making the connection and further possibilities for improved features. Having the connector arm extending side-by-side with the auxiliary leaf means that the sides of the stalls remain closed off by the auxiliary leaf irrespective of any increase in the partition length for oblique disposition of partitions. Moreover, the folding/swinging of the auxiliary leaf relative to the main leaf of the partition at the same time as the pivoting of the connection arm relative to the main leaf of the partition allows the partition as a whole to assume a disposition, apparent from accompanying figure 4. The connection arm and the auxiliary leaf can be folded back towards the side wall as shown, to make connection with the side wall attachment rail at a more forward position than with the known axially projecting telescopic tube (figure 2). This occupies less space longitudinally when the partitions are disposed obliquely compared to the known arrangement shown in figure 2. Therefore with the present invention a shorter box length can be provided to accommodate the same number of horses/ponies.

In accordance with the invention the fixed length connection arm of the partition is also hingedly connected, either to the main leaf or to the auxiliary leaf, so as to be swingeable upwards and downwards, i.e. in a substantially vertical plane, as well as side to side. This has two main advantages. It allows the free end of the arm, which typically needs to project beyond the free end of the auxiliary leaf when making a connection with the opposing side wall of the box, to drop down out of harm's way when loading horses so neither human or animal risk injury from it. The up and down movement also allows the connection arm of the invention to carry a fastener in the form of a retainer pin which can hook into or engage from above into the hole in the opposing side wall rail when making the connection. Thus the arm can easily be lifted and then moved down to make the connection. This is far easier than the previous fastening arrangement (see figure 3) where holes in a U-shaped jaw element 15 had to be lined up with the relevant hole 17 in the rail 18 for insertion of a retainer pin through the aligned holes. Such ease of fastening is important as a horse may be pushing against the partition and moving around in the stall as an operator is in the process of attaching the connection arm to the box side wall. With the previous arrangement the alignment of holes could prove difficult under these circumstances.

### BRIEF DESCRIPTION OF THE DRAWINGS

Further features and advantages of the invention will become apparent from the following description. The invention will be described further, by way of example, with reference to the accompanying drawings, in which:
Figure 1a, 1b, 1c are schematic plan views shown known horsebox partitioning arrangements;
Figure 2 is an enlarged plan view of another known horsebox partition arrangement with the partitions arranged obliquely relative to the direction of travel;
Figure 3 is an enlarged perspective partial view showing the structure of the known partition as depicted in figure 2;
Figure 4 is a plan view of a horsebox provided with embodiments of partitions in accordance with the invention disposed in an oblique arrangement comparable to that in figure 2;
Figure 5 is a plan view of the same horsebox as in figure 4 with the partitions of the invention disposed in an alternative transverse (substantially perpendicular to direction of travel) arrangement;
Figure 6 is a side view of an individual preferred practical embodiment of the partition of the invention;
Figure 7 is the same as Figure 6, but showing the connection arm in a part way lowered position;
Figure 8 is an enlarged perspective partial view, comparable to figure 3, showing the partition of figure 6 as in use;
Figure 9 is a schematic plan view diagram showing favourable and unfavourable configuration of a partition with a pivotal connection arm;
Figure 10 is a perspective partial view to a yet larger scale showing a partially lowered condition of the connection arm of the partition of Figures 6 and 7;
Figure 11 is a view similar to figure 10 showing a partially raised condition of the connection arm;
Figure 12 is a view taken from a different angle, closer to the outer end of the partition, showing the connection arm in a partially raised condition as in Figure 11;
Figure 13 is a further enlarged detail of the connection arm lifting stop means with the arm in a partially raised position similar to that shown in Figures 11 and 12; and
Figure 14 is a similar enlarged detail of the connection arm stop means in a condition where the arm is prevented from being lifted.

### DETAILED DESCRIPTION

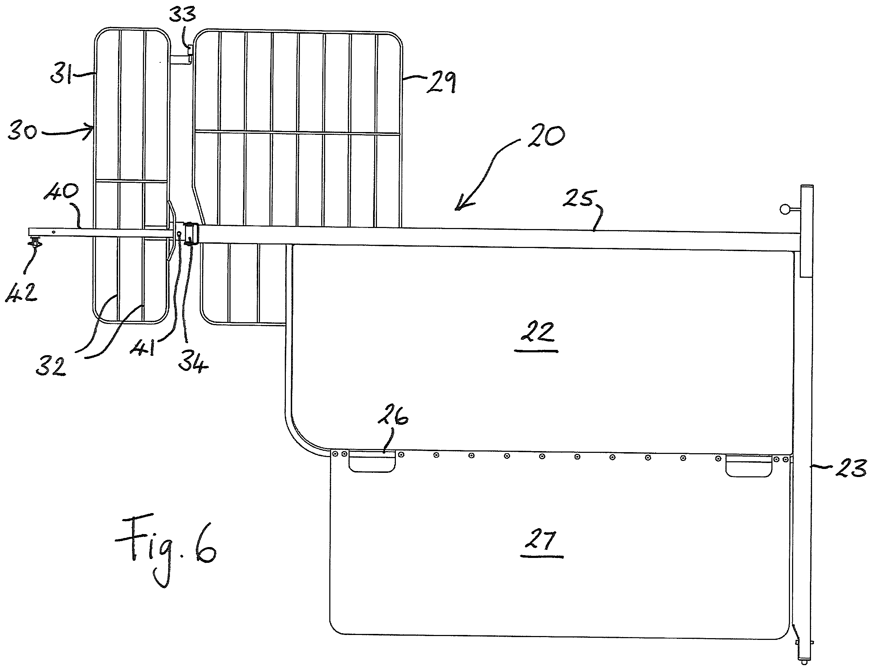

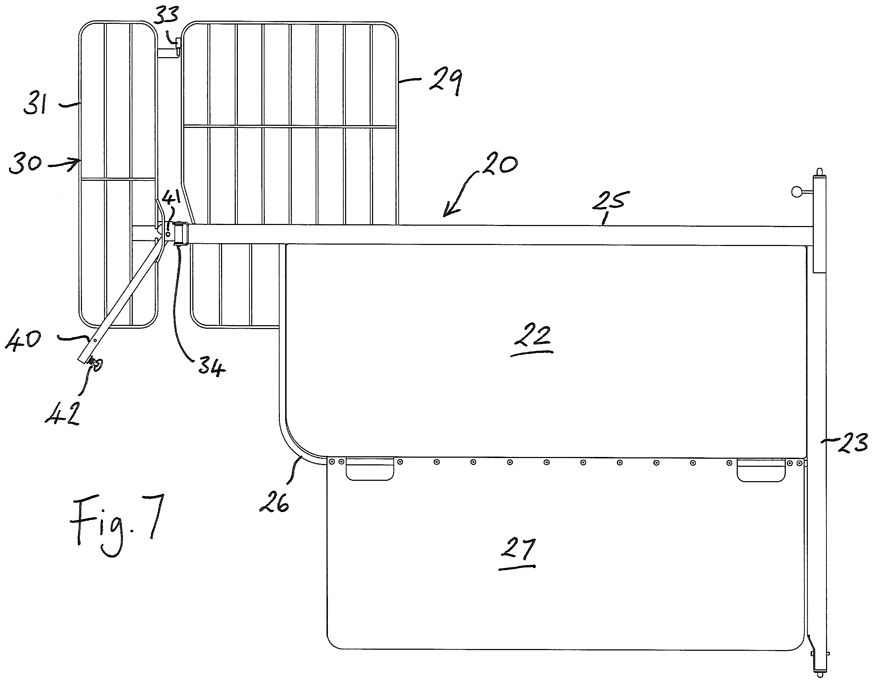

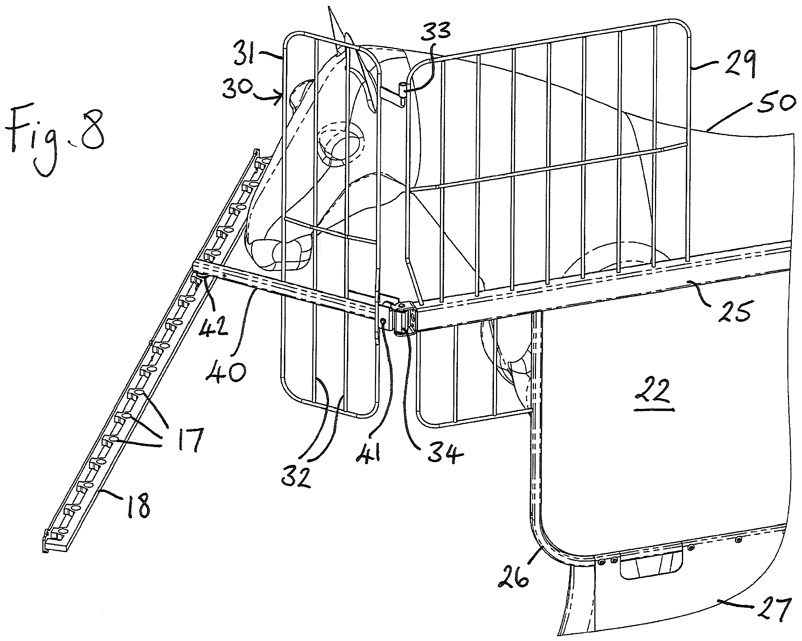

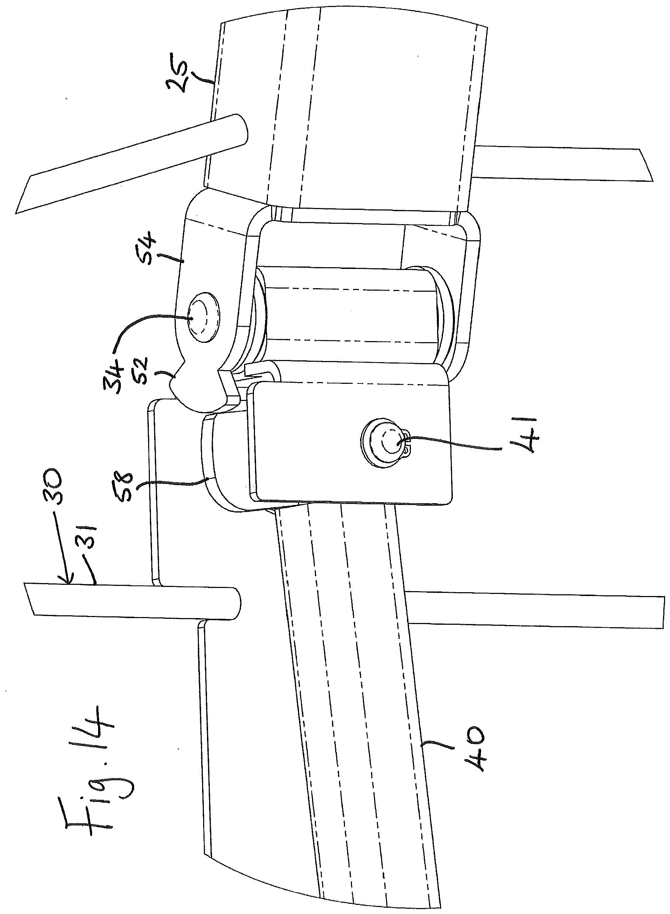

With reference to figures 4 to 8 and 10 to 14, a preferred practical embodiment of a horsebox partition in accordance with the present invention comprises a main leaf designated generally by reference numeral 20, an auxiliary leaf 30 hingedly connected at hinges 33, 34 to an outer end of the main leaf 20, and a fixed length connection arm 40 which is connected to the auxiliary leaf 30 close to the hinge 34 at the outer end of the main leaf 20, and which carries a fastener 42 at its free end. The connection arm 40 is swingable in a vertical plane about pivot pin 41. The structure of the partition as a whole is shown in figures 6 and 7.

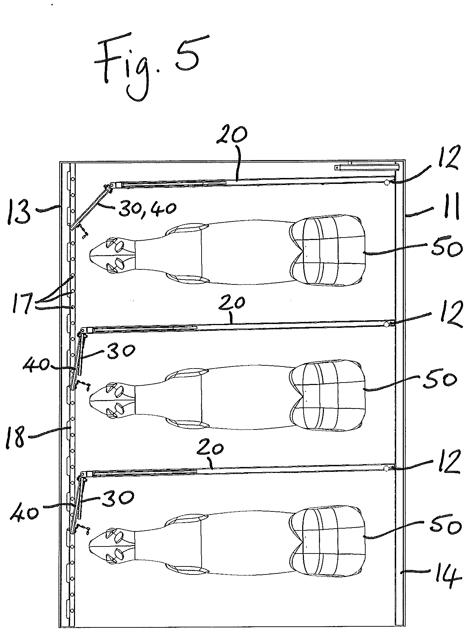

The structure of the main leaf 20 may vary in other embodiments. It is not relevant to the present innovation. As illustrated it comprises a panel 22 mounted in a framework of a tubular post 23 at the inner end of the main leaf 20, an upper tubular cross bar 25 and a bent tubular element 26. In use, the inner post 23 is pivotably connected at a location selected by the user along a rail 14 provided along one side wall 11 of a horse box, with typical positioning being shown in figures 4 and 5. A rubber skirt panel 27 typically hangs down from the lower part of the tubular element 26, while a head height grille 29 is mounted above the upper cross bar 25 and connects to an upper section of the auxiliary leaf 30 by way of the hinge 33.

The auxiliary leaf 30 is in the form of an open grille, having a bent outer frame element 31 and spaced vertical bars 32. It is hingedly connected at the upper and lower hinges 33, 34 to the main leaf 20 so as to swing side to side. It extends the length of the grille 29 of the main leaf 20 and part of the height of the panel 22.

The connection arm 40 may be a hollow profile of square or polygonal cross section. It is connected to the auxiliary leaf 30 near the hinge point 34 so as to swing side to side in unison with and in generally parallel alignment with the auxiliary leaf 30. However, as already mentioned the arm 40 is additionally hingedly connected about a horizontal pivot pin 41, adjacent with the hinge point 34, so as to be swingable up and down in a substantically vertical plane.

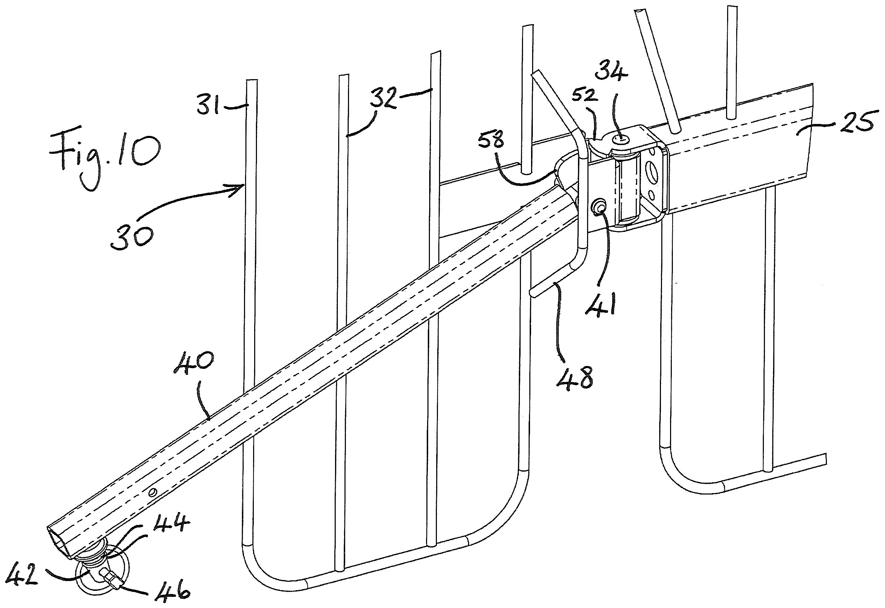

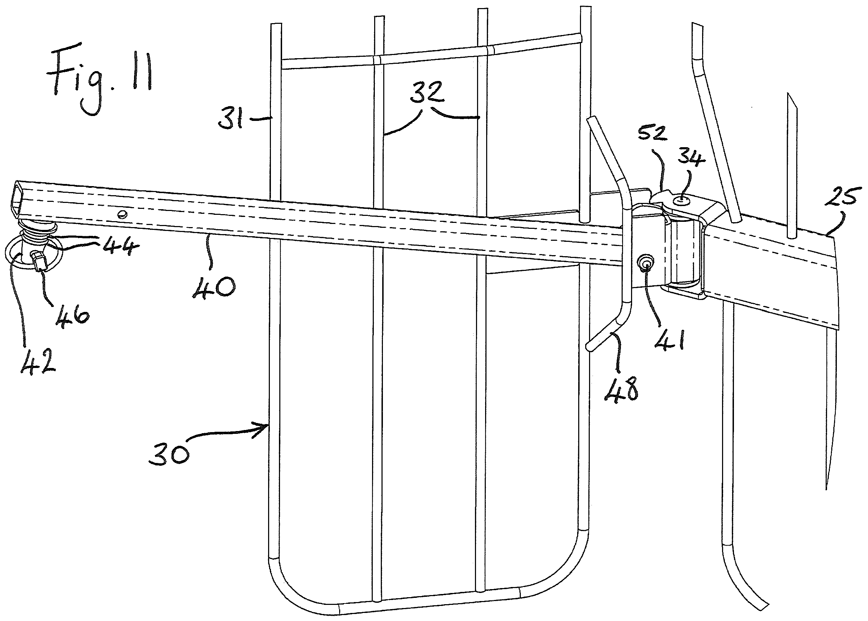

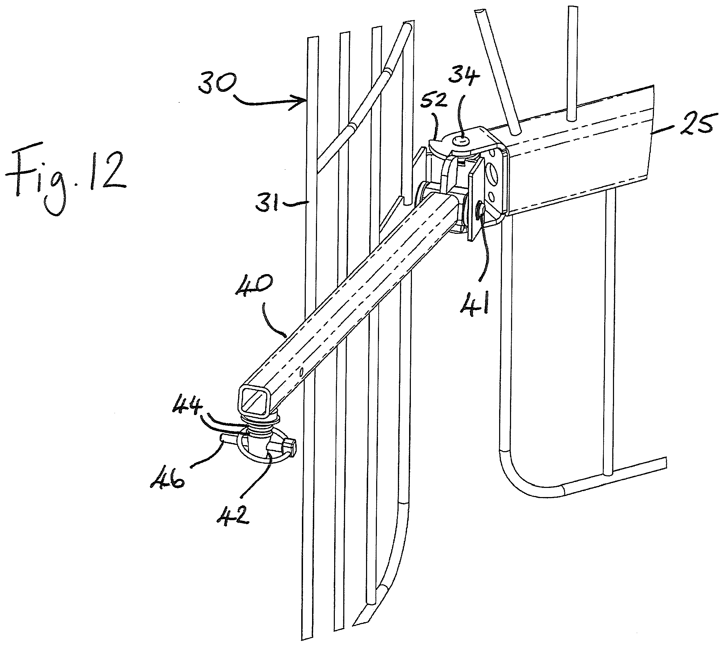

When the connection arm 40 extends in a horizontal position as shown in figure 6, it projects a short distance, in the region of 10cm, beyond the free edge of the auxiliary leaf 30. At its free end the fastener 42 is in the form of a downwardly extending frusto-conical tapering retainer pin on which two rubber O-rings 44 are preferably mounted, and a washer of plastics material may also be provided thereon closely adjacent the arm. This is best shown in figures 10 to 12. The retainer pin 42 has a transverse through passage into which a linchpin 46 can be inserted. Because the connection arm 40 is pivotable in a vertical plane, about the pivot pin 41, it can be lifted to a position raised above horizontal, as shown in figures 11 and 12, to enable it easily to be dropped into engagement with any selected hole 17 in the rail 18.

This is how the free end of the partition is secured to the side wall 13 of the box to form a stall. The O-rings 44 and optional washer are anti-rattle features which prevent direct metal to metal contact noise between the pin 42 and other rail 18. The linchpin 46 is pushed into position after the retainer pin 42 has been inserted and engaged in the hole 17 as the passage to receive the linchpin 46 is then at a position below the rail 18.

A stop element 48 configured as a shallow U-shaped handle is provided on the side of the auxiliary leaf 30 adjacent the pivot pin 41. When the connection arm 40 is not being lifted or is not in a substantially horizontal position when in use for attaching the partition to the rail 18, it swings down to a sloping at rest position, as defined by its abutment against the stop element. In its lower, at rest position, abutting the stop element (see Figure 7), the free end of the connection arm 40 and the retainer pin 42 carried thereby, do not project beyond the free edge of the auxiliary leaf 30. This avoids any risk of injury to human or animal from a projecting element at this height.

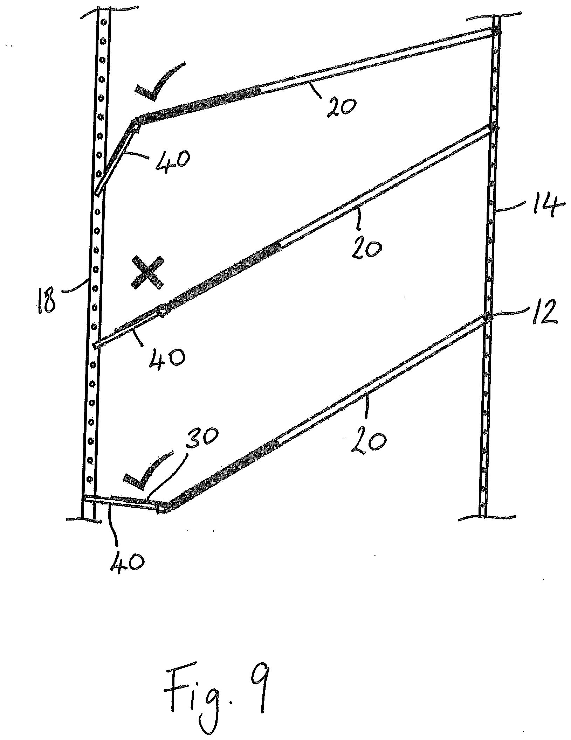

Despite the considerable advantages in terms of space saving and versatility of partition arrangements by having a sideways pivoting auxiliary leaf and connection arm, as explained above with reference to Figures 4 and 5, there is one potential problem which may arise. If a partition is positioned with the auxiliary leaf 30 and the connection arm 40 substantially in alignment with the main leaf 20, or at only a shallow angle, e.g. of less than 45° relative to the main leaf 20, there is a risk that when a horse is confined in a compartment adjacent that partition it may push sideways against the partition with sufficient force to cause the box trailer sides either to deform and cause an angle to be created between the main and auxiliary leaves or to spring outwards and allow the angle between the auxiliary and main leaves to be reversed. This would result in the adjacent compartment being reduced in size. One horse may then have too much space, which is undesirable during transport, and another horse in the adjacent compartment may have too little space, also undesirable. Figure 9 illustrates the partition configurations which are favourable and unfavourable.

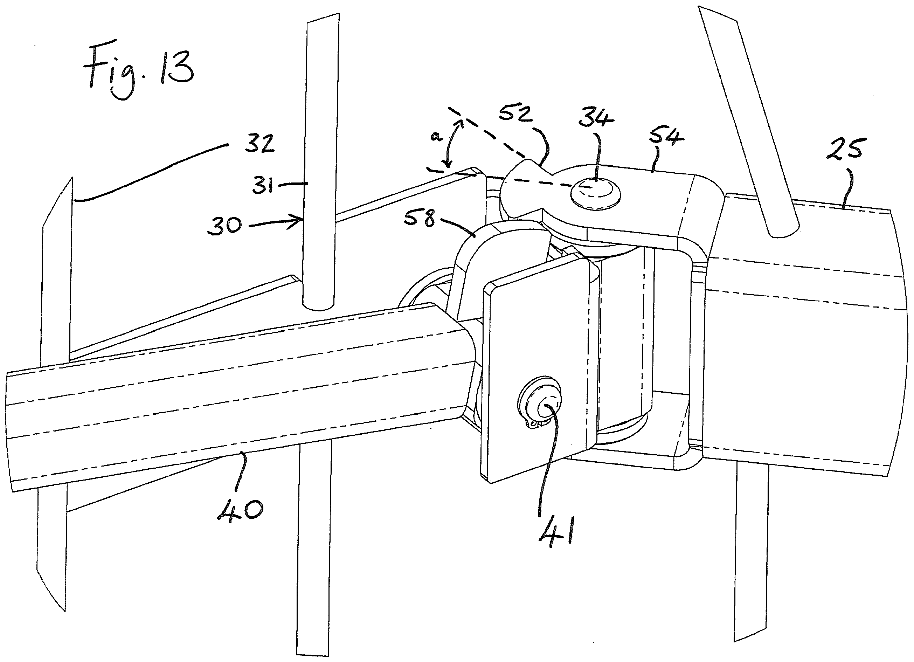

Figures 10 to 14 illustrate an arrangement of an abutment 52 formed on an upper bracket 54 mounting the hinge 34 which acts as a stop to prevent the connection arm 40 being lifted (by pivoting in a vertical plane about the pivot pin 41) when in a certain angular relationship to the main leaf 30. In this particular embodiment, the connection arm 40 carries an upward projection 58 at its end adjacent the pivot pin 41 and the abutment 52 is of dovetail shape, thus blocking upward movement by contact of the projection 58 with the abutment for an angle a of approximately 45° (see Figure 13) either side of where the auxiliary leaf 30 and arm 40 are in line with the main leaf. In this way, because the arm 40 cannot be lifted to allow engagement of the fastener 40, the arm 40 cannot be connected to the other side of the box trailer container at an undesirable angular position relative to the main leaf 20. Obviously a different angular range and a different style of abutment and stop arrangement could be employed in other embodiments.

The overall manner of use of this preferred embodiment of the partition of the invention will be readily apparent from figures 4, 5, 8 and 10 to 14 of the drawings. Just as in the prior art horseboxes of figures 1, 2 and 3, the inner posts 23 of a chosen number of partitions are connected pivotably at selected locations 12 along a rail 14 at a first side of the horse box interior. These locations are chosen for the appropriate spacing to form stalls of appropriate width and orientation for the number of horses, ponies or other animals which are to be transported. An example of an oblique arrangement of partitions providing stalls for two adult horses is shown in figure 4. An example of a transverse arrangement, i.e. substantially perpendicular to direction of travel providing stalls for three smaller animals, such as ponies, is shown in figure 5.

Initially, the partition closest to the front of the box in the direction of travel is fixed in position. The auxiliary leaf 30 and the connection arm 40 are folded to whatever angle is required to attach the fastener 42 to the selected hole 17 on the rail 18 along the opposing side wall 13 of the box, subject only to this not being permitted to be in line or 45° either side, because of the abutment 52. To make the connection, the arm 40 is raised and the retainer pin 42 is then fitted from above into the hole and secured by the linchpin 46. The remaining pivotably connected partitions are swung into an inoperative position flat against the first side wall 11. The animals are then moved into the box one at a time from a door and ramp at the rear of the box. Once each animal is in its position the partition which completes its stall is deployed by being swung into position behind it. Again the respective auxiliary leaf 30 and the connection arm 40 are folded to whatever angle is required to attach the respective fastener 42 to the selected position of hole 17 on the rail along the other side 13 of the box, subject only to this not being permitted to be in line or 45° either side, because of the abutment 52.

Comparing figure 4 with the prior art arrangement shown in figure 2 it will be seen that the pivotable folding of the auxiliary leaf 30 and the connection arm 40 allows these to be folded back so as to connect to the opposite side wall of the box in a more forward position than was possible with the prior art, where the connection arm extended in line with the panel. Thus the length of the box or trailer can be shorter and still accommodate the same number of animals, with less wasted space at the corners of the enclosure.

The invention is not restricted to the details of the foregoing embodiments and many variations are possible. In particular, in other embodiments, possibly less favourable, the fastener on the connection arm may take another form from the illustrated embodiment. It need not be tapered, nor even have a tapered portion and could be straight. With the illustrated type of fastener or similar, the linchpin could be replaced by any other suitable type of clip or pin. The auxiliary leaf could be in the form of a solid sheet, for example of plywood or plastics material, instead of being in the form of an open grill, as in the illustrated version. Many other alternatives to the configuration and material of the individual components are possible as already mentioned.

Throughout the description and claims of this specification, the words "comprise" and "contain" and variations of them mean "including but not limited to", and they are not intended to (and do not) exclude other components. Throughout the description and claims of this specification, the singular encompasses the plural unless the context otherwise requires. Features described in conjunction with a particular embodiment or example of the invention are to be understood to be applicable to any other embodiment or example unless incompatible therewith.

## Claims

1. A partition for a horsebox comprising:
a main leaf (20) having a first end (23) adapted for pivotable attachment to a side wall (11) of a box enclosure and having a second end; an auxiliary leaf (30) hingedly connected to the second end of the main leaf (20); a fixed length connection arm (40) which is connected either to the main leaf (20) or to the auxiliary leaf (30) and which is swingable in a substantially horizontal plane and in a substantially vertical plane; and a fastening device (42) carried at the free end of the connection arm (40); **characterised in that** the fixed length connection arm (40) extends side-by-side with the auxiliary leaf (30) and is connected to the auxiliary leaf (30) so as to swing side to side in unison with the auxiliary leaf (30), but is also hingedly connected, either to the main leaf (20) or to the auxiliary leaf (30), so as to be swingable in a substantially vertical plane.

2. A partition for a horsebox according to claim 1 wherein the fixed length connection arm (40) and the auxiliary leaf (30) of the partition are mounted to a common, substantially vertical hinge (34) at the second end of the main leaf (20) so as to swing side to side in unison.

3. A partition for a horsebox according to claim 1 or 2 wherein the fixed length connection arm (40) has a lower at rest position wherein it does not project outwards beyond the free end of the auxiliary leaf (30) of the partition.

4. A partition for a horsebox according to any preceding claim wherein a stop element (48) is provided to define the lower at rest position of the fixed length connection arm (40).

5. A partition for a horsebox according to claim 4 wherein the stop element (48) defines the lower at rest position of the fixed length connection arm (40) to be at an angle sloping downward from its hinged connection at an angle between horizontal and vertical.

6. A partition for a horsebox according to any preceding claim wherein the auxiliary leaf (30) is in the form of an outer frame (31) with upright crosspieces (32) mounted therein.

7. A partition for a horsebox according to any preceding claim wherein the fastening means (42) is a downwardly projecting retainer pin mounted at the free end of the fixed length connection arm (40) for engagement into a hole (17) in a standard side wall rail (18) of a horsebox.

8. A partition for a horsebox according to claim 7 wherein the retainer pin (42) is tapered.

9. A partition for a horsebox according to claim 7 or 8 wherein the retainer pin (42) is provided with at least one O-ring (44) or other annular resilient element.

10. A partition for a horsebox according to any of claims 7 to 9, where the retainer pin (42) is provided with a transverse through passage for engagement of a linchpin (46).

11. A partition for a horsebox according to any preceding claim wherein an abutment (52) is provided to prevent upward movement of the fixed length connection arm (40) when the arm is in co-planar alignment with the main leaf (20) and in a predetermined angular range each side of such co-planar alignment.

12. A horsebox provided with at least one partition as defined in any preceding claim.

## Patentansprüche

1. Abtrennung für eine Pferdebox, umfassend:
einen Hauptflügel (20), der ein erstes Ende (23) aufweist, das zur schwenkbaren Anbringung an einer Seitenwand (11) einer Boxeinfassung ausgelegt ist, und ein zweites Ende aufweist; einen Nebenflügel (30), der gelenkig mit dem zweiten Ende des Hauptflügels (20) verbunden ist; einen Verbindungsarm (40) mit fester Länge, der entweder mit dem Hauptflügel (20) oder mit dem Nebenflügel (30) verbunden ist und der in einer im Wesentlichen horizontalen Ebene und in einer im Wesentlichen vertikalen Ebene schwingbar ist; und eine Befestigungsvorrichtung (42), die an dem freien Ende des Verbindungsarms (40) getragen wird; **dadurch gekennzeichnet, dass** sich der Verbindungsarm (40) mit fester Länge Seite an Seite mit dem Nebenflügel (30) erstreckt und mit dem Nebenflügel (30) verbunden ist, um gemeinsam mit dem Nebenflügel (30) Seite zu Seite zu schwingen, aber auch gelenkig verbunden ist, entweder mit dem Hauptflügel (20) oder mit dem Nebenflügel (30), um in einer im Wesentlichen vertikalen Ebene schwingbar zu sein.

2. Abtrennung für eine Pferdebox nach Anspruch 1, wobei der Verbindungsarm (40) mit fester Länge und der Nebenflügel (30) der Abtrennung an einem gemeinsamen, im Wesentlichen vertikalen Gelenk (34) an dem zweiten Ende des Hauptflügels (20) montiert sind, um gemeinsam Seite zu Seite zu schwingen.

3. Abtrennung für eine Pferdebox nach Anspruch 1 oder 2, wobei der Verbindungsarm (40) mit fester Länge eine niedrigere Ruheposition aufweist, wobei er nicht nach außen über das freie Ende des Nebenflügels (30) der Abtrennung hinausragt.

4. Abtrennung für eine Pferdebox nach einem vorhergehenden Anspruch, wobei ein Anschlagselement (48) bereitgestellt ist, um die niedrigere Ruheposition des Verbindungsarms (40) mit fester Länge zu definieren.

5. Abtrennung für eine Pferdebox nach Anspruch 4, wobei das Anschlagselement (48) die niedrigere Ruheposition des Verbindungsarms (40) mit fester Länge als in einem Winkel definiert, der sich von seiner gelenkigen Verbindung in einem Winkel zwischen horizontal und vertikal nach unten neigt.

6. Abtrennung für eine Pferdebox nach einem vorhergehenden Anspruch, wobei der Nebenflügel (30) in der Form eines Außenrahmens (31) mit darin montierten aufrechten Querstücken (32) ist.

7. Abtrennung für eine Pferdebox nach einem vorhergehenden Anspruch, wobei das Befestigungsmittel (42) ein nach unten ragender Haltestift ist, der an dem freien Ende des Verbindungsarms (40) mit fester Länge montiert ist, um ein Loch (17) in einer Standardseitenwandschiene (18) einer Pferdebox in Eingriff zu nehmen.

8. Abtrennung für eine Pferdebox nach Anspruch 7, wobei sich der Haltestift (42) verjüngt.

9. Abtrennung für eine Pferdebox nach Anspruch 7 oder 8, wobei der Haltestift (42) mit zumindest einem O-Ring (44) oder einem anderen ringförmigen nachgiebigen Element bereitgestellt ist.

10. Abtrennung für eine Pferdebox nach einem der Ansprüche 7 bis 9, wobei der Haltestift (42) mit einem transversalen Durchlass bereitgestellt ist, um einen Dreh- und Angelpunkt (46) in Eingriff zu nehmen.

11. Abtrennung für eine Pferdebox nach einem vorhergehenden Anspruch, wobei ein Widerlager (52) bereitgestellt ist, um Aufwärtsbewegung des Verbindungsarms (40) mit fester Länge zu verhindern, wenn sich der Arm in koplanarer Ausrichtung mit dem Hauptflügel (20) und in einer vorbestimmten Winkelspanne auf jeder Seite einer solchen koplanaren Ausrichtung befindet.

12. Pferdebox, die mit zumindest einer Abtrennung nach einem vorhergehenden Anspruch bereitgestellt ist.

## Revendications

1. Séparation pour véhicule de transport de chevaux comprenant :
un vantail principal (20) possédant une première extrémité (23) adaptée pour une fixation pivotante à une paroi latérale (11) d'une enceinte de véhicule de transport et possédant une seconde extrémité ; un vantail auxiliaire (30) raccordé de manière articulée à la seconde extrémité du vantail principal (20) ; un bras de liaison de longueur fixe (40) qui est raccordé soit au vantail principal (20), soit au vantail auxiliaire (30) et qui peut pivoter dans un plan sensiblement horizontal et dans un plan sensiblement vertical ; et un dispositif de fixation (42) porté au niveau de l'extrémité libre du bras de liaison (40) ; **caractérisé en ce que** le bras de liaison de longueur fixe (40) s'étend côte à côte avec le vantail auxiliaire (30) et est raccordé au vantail auxiliaire (30) de façon à pivoter côté à côte à l'unisson avec le vantail auxiliaire (30), mais est également raccordé de manière articulée, soit au vantail principal (20), soit au vantail auxiliaire (30), de façon à pouvoir pivoter dans un plan sensiblement vertical.

2. Séparation pour véhicule de transport de chevaux selon la revendication 1, ledit bras de liaison de longueur fixe (40) et ledit vantail auxiliaire (30) de la séparation étant montés sur une charnière commune sensiblement verticale (34) au niveau la seconde extrémité du vantail principal (20) de façon à pivoter côté à côte à l'unisson.

3. Séparation pour véhicule de transport de chevaux selon la revendication 1 ou 2, ledit bras de liaison de longueur fixe (40) possédant une position inférieure au repos, celui-ci ne faisant pas saillie vers l'extérieur au-delà de l'extrémité libre du vantail auxiliaire (30) de la séparation.

4. Séparation pour un véhicule de transport de chevaux selon l'une quelconque des revendications précédentes, un élément d'arrêt (48) étant prévu pour définir la position inférieure au repos du bras de liaison de longueur fixe (40).

5. Séparation pour un véhicule de transport de chevaux selon la revendication 4, ledit élément d'arrêt (48) définissant la position inférieure au repos du bras de liaison de longueur fixe (40) de façon à former un angle descendant à partir de sa liaison articulée selon un angle entre l'horizontale et la verticale.

6. Séparation pour véhicule de transport de chevaux selon l'une quelconque des revendications précédentes, ledit vantail auxiliaire (30) présentant la forme d'un cadre externe (31) avec des montants verticaux (32) montés dans celui-ci.

7. Séparation pour véhicule de transport de chevaux selon l'une quelconque des revendications précédentes, ledit moyen de fixation (42) étant une goupille de retenue faisant saillie vers le bas montée à l'extrémité libre du bras de liaison de longueur fixe (40) pour se mettre en prise dans un trou (17) d'un rail de paroi latérale standard (18) d'un véhicule de transport de chevaux.

8. Séparation pour véhicule de transport de chevaux selon la revendication 7, ladite goupille de retenue (42) étant effilée.

9. Séparation pour véhicule de transport de chevaux selon la revendication 7 ou 8, ladite goupille de retenue (42) étant dotée d'au moins un joint torique (44) ou d'un autre élément élastique annulaire.

10. Séparation pour véhicule de transport de chevaux selon l'une quelconque des revendications 7 à 9, ladite goupille de retenue (42) étant dotée d'un passage transversal traversant pour la mise en prise d'une goupille clip (46).

11. Séparation pour véhicule de transport de chevaux selon l'une quelconque des revendications précédentes, une butée (52) étant prévue pour empêcher un déplacement vers le haut du bras de liaison de longueur fixe (40) lorsque le bras est dans un alignement coplanaire avec le vantail principal (20) et dans une plage angulaire prédéfinie de chaque côté d'un tel alignement coplanaire.

12. Véhicule de transport de chevaux doté d'au moins une séparation telle que définie dans l'une quelconque des revendications précédentes.
